# EUROPEAN PATENT APPLICATION

(11) **EP 3 706 402 A1**
(43) Date of publication of application: **09.09.2020**
(21) Application number: 20160933.6
(22) Date of filing: 04.03.2020
(51) Int. Cl.: H04M 3/523

(54) **PRIORITY RECONNECTION OF DROPPED NODES FROM A NETWORK**

(30) Priority: 04.03.2019 US 201916291549
(71) Applicant: Avaya Inc., Santa Clara, CA 95054-1233 (US)
(72) Inventor: BALASAYGUN, Mehmet, Freehold, New Jersey 07728 (US); GREBOVIC, Dragan, Amesbury, Massachusetts 01913 (US); CHAVEZ, David, Broomfield, Colorado 80020 (US); HASERODT, Kurt, Westminster, Colorado 80031 (US)
(74) Representative: Williams, David John

(57) **Abstract**

Contact centers may receive a call that is unintentionally disconnected or has poor audio quality. If the customer needs to call again, re-entering the normal queuing process, which may have a significant delay, or re-starting an issue (e.g., providing background information, stating a problem, etc.) further adds to the frustration. Methods and systems are provided to enable a customer, who is disconnected or other wise unable to communicate effectively with an agent, to be re-queued at a higher priority, if they call the contact center again, such as within a period of time likely to be associated with the same event.

## Description

### COPYRIGHT NOTICE

A portion of the disclosure of this patent document contains material that is subject to copyright protection. The copyright owner has not objected to the facsimile reproduction by anyone of the patent document or the patent disclosure as it appears in the Patent and Trademark Office patent files or records, but otherwise reserves all copyright rights whatsoever.

### FIELD OF THE DISCLOSURE

The invention relates generally to systems and methods for managing nodes on a network and particularly to reconnecting dropped nodes.

### BACKGROUND

One of the top goals of modern contact centers is to provide seamless and efficient customer service under all conditions. Problems arise when there are network and call issues, such as dropped connections, that create a need to call back a particular agent (or expert in a certain area), and the need to gently handle times when a customer is frustrated with an automated part of a contact center.

### SUMMARY

In order to combat customer frustrations and improve customer satisfaction, embodiments herein are generally directed towards the creation and management of a "fast pass." This fast pass allows the customer to connect to an agent with additional priority and bypassing others in a queue and/or an IVR.

In one embodiment, an Artificial Intelligence (AI) system is provided to determine if a customer is having ongoing issues, a particular issue is not getting resolved, or the issue resolution needs to be expedited. The AI system will be operable to assign a fast pass to a customer who has called into an AI-enabled contact center system. The AI system in the contact center monitors inbound calls for patterns and can customize routing of incoming calls based on dynamic criteria derived from the system's learnings over time. The fast pass may provide priority access to multi-agent services and escalations if the voice call is dropped or another reason for expediency has arisen. Additionally, different modalities may be connected. The system can provide call admission control (CAC) based on call/contact history. Embodiments include a network resource allocation solution and/or an agent resource allocation solution based on frequency of interactions and providing preferential treatment. For example, if a call in a first channel is broken or otherwise failing, then try another like chat; if that next channel doesn't work, then give higher priority to this caller for other network resources (e.g., give the caller a priority to other call channel or communication channel resources in the network). This is analogous to assigning a call priority to switches or ports in the system, except that the priority is dynamically assigned to the caller or the agent based on past call history (e.g., it isn't programmatically applied based on caller ID or caller importance like in military/government solutions). A manual determination may be provided as well for ad hoc implementation.

Fast pass routing to an experienced or specific agent may be used for historically marked, categorically marked, agent marked, or sentiment-based preference marked contacts. Calls may be historically marked when the call is poor quality, gets disconnected, or has some other defect. In cases where instructions are unclear or a product has known issues, the callers might get preferential treatment for calls and other modalities/channels. The system will be operable to scan case numbers and content to determine who may receive a fast pass and preferential treatment. Temporary agent marking gives the agent latitude to mark a timer type priority (short time priority) when the agent knows that the customer will call back with predetermined reasons and can be provided a mechanism for marking. Sentiment-based preference marking may be applied by the system or an agent when a customer gets frustrated with an Interactive Voice Response (IVR) system or with an agent's call handling.

To avoid gaming of the system (e.g., having callers just call in a bunch to overwhelm the system), the system can utilize existing or new white list/black lists. The existing blacklist feature blocks a caller from contacting agents, not by modifying queue position. The blacklist feature works by sending the caller to a recording once the caller has manually been added to the blacklist. The new concept will be that as customers experience difficulties with a particular channel (e.g., due to network failure), the system will recognize them calling back into the system for a legitimate purpose (see the white/black list). The system can assign the caller priority resources in the form of network resources like ports or communication channels as well as possibly assigning certain agent resources as a priority. Agents can effectively blacklist the customers if the fast pass is abused based on fast pass history. Additionally, slow pass may be implemented to handle the AI and agent blacklist customer cases. Value is added to the system by having the AI populate and detect callers on the blacklist. The AI can allow blacklist customer calls to go through at a lower priority or at the lowest queue position. These can effectively limit access to the feature to trusted callers, preventing Distributed Denial of Service (DDoS) attacks and other abuses.

These and other needs are addressed by the various embodiments and configurations of the present invention. The present invention can provide a number of advantages depending on the particular configuration. These and other advantages will be apparent from the disclosure of the invention(s) contained herein.

In one embodiment, a system is disclosed, comprising: a microprocessor; a data storage; and a network interface; and the microprocessor: monitors a first communication occurring between a first customer communication device and a first agent communication device utilizing the network interface; determines the monitored first communication has insufficient connection quality; in response to the first monitored communication having an insufficient connection quality, setting a priority record in the data storage to comprising indicia of high priority for the first customer associated with the first customer endpoint; receives a plurality of subsequent communications via the network interface from a plurality of subsequent customer communication devices; enqueues the plurality of subsequent communications to connect to ones of a plurality of agent communication devices in a first priority order; and upon determining one of the plurality of subsequent communications is associated with the priority record comprising indicia of high priority, executing a first requeueing of the plurality of subsequent communications to cause the one of the plurality of subsequent communications to be connected to the next available one of the agent communication device.

In another embodiment, a method is disclosed, comprising: monitoring a first communication occurring between a first customer communication device and a first agent communication device; determining the monitored first communication has insufficient connection quality; in response to the first monitored communication having an insufficient connection quality, setting a priority record to comprising indicia of high priority for the first customer associated with the first customer endpoint; receiving a plurality of subsequent communications from a corresponding plurality of subsequent customer communication devices; enqueuing the plurality of subsequent communications to connect to ones of a plurality of agent communication devices in a first priority order; and upon determining one of the plurality of subsequent communications is associated with the priority record comprising indicia of high priority, executing a first requeueing of the plurality of subsequent communications to cause the one of the plurality of subsequent communications to be connected to the next available one of the agent communication device.

In another embodiment, a system is disclosed, comprising: means to monitor a first communication occurring between a first customer communication device and a first agent communication device; means to determine the monitored first communication has insufficient connection quality; in response to the first monitored communication having an insufficient connection quality, means to set a priority record to comprising indicia of high priority for the first customer associated with the first customer endpoint; means to receive a plurality of subsequent communications from a corresponding plurality of subsequent customer communication devices; means to enqueue the plurality of subsequent communications to connect to ones of a plurality of agent communication devices in a first priority order; and upon determining one of the plurality of subsequent communications is associated with the priority record comprising indicia of high priority, means to execute a first requeueing of the plurality of subsequent communications to cause the one of the plurality of subsequent communications to be connected to the next available one of the agent communication device.

The phrases "at least one," "one or more," "or," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B, and C together.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

Aspects of the present disclosure may take the form of an embodiment that is entirely hardware , an embodiment that is entirely software (including firmware, resident software, microcode, etc.) or an embodiment combining software and hardware aspects that may all generally be referred to herein as a "circuit," "module," or "system." Any combination of one or more computer-readable medium(s) may be utilized. The computer-readable medium may be a computer-readable signal medium or a computer-readable storage medium.

A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electromagnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device. Program code embodied on a computer-readable medium may be transmitted using any appropriate medium, including, but not limited to, wireless, wireline, optical fiber cable, RF, etc., or any suitable combination of the foregoing.

The terms "determine," "calculate," "compute," and variations thereof, as used herein, are used interchangeably and include any type of methodology, process, mathematical operation or technique.

The term "means" as used herein shall be given its broadest possible interpretation in accordance with 35 U.S.C., Section 112(f) and/or Section 112, Paragraph 6. Accordingly, a claim incorporating the term "means" shall cover all structures, materials, or acts set forth herein, and all of the equivalents thereof. Further, the structures, materials or acts and the equivalents thereof shall include all those described in the summary, brief description of the drawings, detailed description, abstract, and claims themselves.

The preceding is a simplified summary of the invention to provide an understanding of some aspects of the invention. This summary is neither an extensive nor exhaustive overview of the invention and its various embodiments. It is intended neither to identify key or critical elements of the invention nor to delineate the scope of the invention but to present selected concepts of the invention in a simplified form as an introduction to the more detailed description presented below. As will be appreciated, other embodiments of the invention are possible utilizing, alone or in combination, one or more of the features set forth above or described in detail below. Also, while the disclosure is presented in terms of exemplary embodiments, it should be appreciated that an individual aspect of the disclosure can be separately claimed.

### BRIEF DESCRIPTION OF THE DRAWINGS

The present disclosure is described in conjunction with the appended figures:
Fig. 1 depicts a first system in accordance with embodiments of the present disclosure;
Fig. 2 depicts a second system in accordance with embodiments of the present disclosure;
Fig. 3 depicts a data structure in accordance with embodiments of the present disclosure;
Fig. 4 depicts a first process in accordance with embodiments of the present disclosure;
Fig. 5 depicts a second process in accordance with embodiments of the present disclosure; and
Fig 6. depicts a server system in accordance with embodiments of the present disclosure.

### DETAILED DESCRIPTION

The ensuing description provides embodiments only and is not intended to limit the scope, applicability, or configuration of the claims. Rather, the ensuing description will provide those skilled in the art with an enabling description for implementing the embodiments. It will be understood that various changes may be made in the function and arrangement of elements without departing from the spirit and scope of the appended claims.

Any reference in the description comprising an element number, without a subelement identifier when a subelement identifier exists in the figures, when used in the plural, is intended to reference any two or more elements with a like element number. When such a reference is made in the singular form, it is intended to reference one of the elements with the like element number without limitation to a specific one of the elements. Any explicit usage herein to the contrary or providing further qualification or identification shall take precedence.

The exemplary systems and methods of this disclosure will also be described in relation to analysis software, modules, and associated analysis hardware. However, to avoid unnecessarily obscuring the present disclosure, the following description omits well-known structures, components, and devices, which may be omitted from or shown in a simplified form in the figures or otherwise summarized.

For purposes of explanation, numerous details are set forth in order to provide a thorough understanding of the present disclosure. It should be appreciated, however, that the present disclosure may be practiced in a variety of ways beyond the specific details set forth herein.

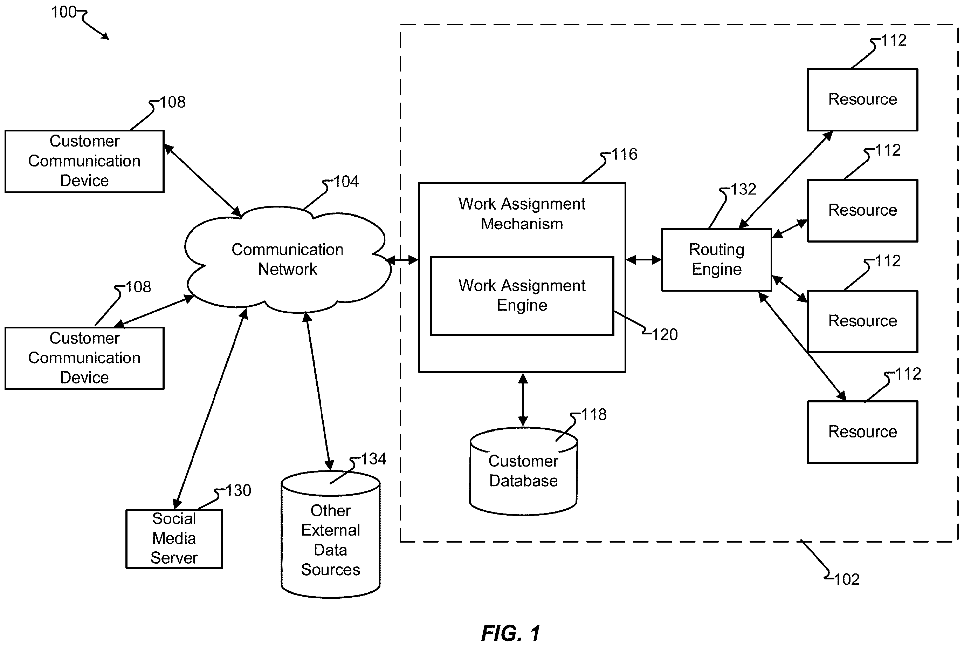

With reference now to Fig. 1, communication system 100 is discussed in accordance with at least some embodiments of the present disclosure. The communication system 100 may be a distributed system and, in some embodiments, comprises a communication network 104 connecting one or more communication devices 108 to a work assignment mechanism 116, which may be owned and operated by an enterprise administering contact center 102 in which a plurality of resources 112 is distributed to handle incoming work items (in the form of contacts) from customer communication devices 108.

Contact center 102 is variously embodied to receive and/or send messages that are or are associated with work items and the processing and management (e.g., scheduling, assigning, routing, generating, accounting, receiving, monitoring, reviewing, etc.) of the work items by one or more resources 112. The work items are generally generated and/or received requests for a processing resource 112 embodied as, or a component of, an electronic and/or electromagnetically conveyed message. Contact center 102 may include more or fewer components than illustrated and/or provide more or fewer services than illustrated. The border indicating contact center 102 may be a physical boundary (e.g., a building, campus, etc.), legal boundary (e.g., company, enterprise, etc.), and/or logical boundary (e.g., resources 112 utilized to provide services to customers for a customer of contact center 102).

Furthermore, the border illustrating contact center 102 may be as-illustrated or, in other embodiments, include alterations and/or more and/or fewer components than illustrated. For example, in other embodiments, one or more of resources 112, customer database 118, and/or other component may connect to routing engine 132 via communication network 104, such as when such components connect via a public network (e.g., Internet). In another embodiment, communication network 104 may be a private utilization of, at least in part, a public network (e.g., VPN); a private network located, at least partially, within contact center 102; or a mixture of private and public networks that may be utilized to provide electronic communication of components described herein. Additionally, it should be appreciated that components illustrated as external, such as social media server 130 and/or other external data sources 134 may be within contact center 102 physically and/or logically, but still be considered external for other purposes. For example, contact center 102 may operate social media server 130 (e.g., a website operable to receive user messages from customers and/or resources 112) as one means to interact with customers via their customer communication device 108.

Customer communication devices 108 are embodied as external to contact center 102 as they are under the more direct control of their respective user or customer. However, embodiments may be provided whereby one or more customer communication devices 108 are physically and/or logically located within contact center 102 and are still considered external to contact center 102, such as when a customer utilizes customer communication device 108 at a kiosk and attaches to a private network of contact center 102 (e.g., WiFi connection to a kiosk, etc.), within or controlled by contact center 102.

It should be appreciated that the description of contact center 102 provides at least one embodiment whereby the following embodiments may be more readily understood without limiting such embodiments. Contact center 102 may be further altered, added to, and/or subtracted from without departing from the scope of any embodiment described herein and without limiting the scope of the embodiments or claims, except as expressly provided.

Additionally, contact center 102 may incorporate and/or utilize social media website 130 and/or other external data sources 134 may be utilized to provide one means for a resource 112 to receive and/or retrieve contacts and connect to a customer of a contact center 102. Other external data sources 134 may include data sources, such as service bureaus, third-party data providers (e.g., credit agencies, public and/or private records, etc.). Customers may utilize their respective customer communication device 108 to send/receive communications utilizing social media server 130.

In accordance with at least some embodiments of the present disclosure, the communication network 104 may comprise any type of known communication medium or collection of communication media and may use any type of protocols to transport electronic messages between endpoints. The communication network 104 may include wired and/or wireless communication technologies. The Internet is an example of the communication network 104 that constitutes an Internet Protocol (IP) network consisting of many computers, computing networks, and other communication devices located all over the world, which are connected through many telephone systems and other means. Other examples of the communication network 104 include, without limitation, a standard Plain Old Telephone System (POTS), an Integrated Services Digital Network (ISDN), the Public Switched Telephone Network (PSTN), a Local Area Network (LAN), a Wide Area Network (WAN), a Session Initiation Protocol (SIP) network, a Voice over IP (VoIP) network, a cellular network, and any other type of packet-switched or circuit-switched network known in the art. In addition, it can be appreciated that the communication network 104 need not be limited to any one network type and instead may be comprised of a number of different networks and/or network types. As one example, embodiments of the present disclosure may be utilized to increase the efficiency of a grid-based contact center 102. Examples of a grid-based contact center 102 are more fully described in U.S. Patent Publication No. 2010/0296417 to Steiner, the entire contents of which are hereby incorporated herein by reference. Moreover, the communication network 104 may comprise a number of different communication media, such as coaxial cable, copper cable/wire, fiber-optic cable, antennas for transmitting/receiving wireless messages, and combinations thereof.

The communication devices 108 may correspond to customer communication devices. In accordance with at least some embodiments of the present disclosure, a customer may utilize their communication device 108 to initiate a work item. Illustrative work items include, but are not limited to, a contact directed toward and received at a contact center 102, a web page request directed toward and received at a server farm (e.g., collection of servers), a media request, an application request (e.g., a request for application resources location on a remote application server, such as a SIP application server), and the like. The work item may be in the form of a message or collection of messages transmitted over the communication network 104. For example, the work item may be transmitted as a telephone call, a packet or collection of packets (e.g., IP packets transmitted over an IP network), an email message, an Instant Message, an SMS message, a fax, and combinations thereof. In some embodiments, the communication may not necessarily be directed at the work assignment mechanism 116, but rather may be on some other server in the communication network 104 where it is harvested by the work assignment mechanism 116, which generates a work item for the harvested communication, such as social media server 130. An example of such a harvested communication includes a social media communication that is harvested by the work assignment mechanism 116 from a social media network or server 130. Exemplary architectures for harvesting social media communications and generating work items based thereon are described in U.S. Patent Application Nos. 12/784,369, 12/706,942, and 12/707,277, filed March 20, 2010, February 17, 2010, and February 17, 2010, respectively; each of which is hereby incorporated herein by reference in its entirety.

The format of the work item may depend upon the capabilities of the communication device 108 and the format of the communication. In particular, work items are logical representations within a contact center 102 of work to be performed in connection with servicing a communication received at contact center 102 (and, more specifically, the work assignment mechanism 116). The communication may be received and maintained at the work assignment mechanism 116, a switch or server connected to the work assignment mechanism 116, or the like, until a resource 112 is assigned to the work item representing that communication. At which point, the work assignment mechanism 116 passes the work item to a routing engine 132 to connect the communication device 108, which initiated the communication, with the assigned resource 112.

Although the routing engine 132 is depicted as being separate from the work assignment mechanism 116, the routing engine 132 may be incorporated into the work assignment mechanism 116 or its functionality may be executed by the work assignment engine 120.

In accordance with at least some embodiments of the present disclosure, the communication devices 108 may comprise any type of known communication equipment or collection of communication equipment. Examples of a suitable communication device 108 include, but are not limited to, a personal computer, laptop, Personal Digital Assistant (PDA), cellular phone, smart phone, telephone, or combinations thereof. In general, each communication device 108 may be adapted to support video, audio, text, and/or data communications with other communication devices 108 as well as the processing resources 112. The type of medium used by the communication device 108 to communicate with other communication devices 108 or processing resources 112 may depend upon the communication applications available on the communication device 108.

In accordance with at least some embodiments of the present disclosure, the work item is sent toward a collection of processing resources 112 via the combined efforts of the work assignment mechanism 116 and routing engine 132. The resources 112 can either be completely automated resources (e.g., Interactive Voice Response (IVR) units, microprocessors, servers, or the like), human resources utilizing communication devices (e.g., human agents utilizing a computer, telephone, laptop, etc.), or any other resource known to be used in contact center 102.

As discussed above, the work assignment mechanism 116 and resources 112 may be owned and operated by a common entity in a contact center 102 format. In some embodiments, the work assignment mechanism 116 may be administered by multiple enterprises, each of which has its own dedicated resources 112 connected to the work assignment mechanism 116.

In some embodiments, the work assignment mechanism 116 comprises a work assignment engine 120, which enables the work assignment mechanism 116 to make intelligent routing decisions for work items. In some embodiments, the work assignment engine 120 is configured to administer and make work assignment decisions in a queueless contact center 102, as is described in U.S. Patent Application Serial No. 12/882,950, the entire contents of which are hereby incorporated herein by reference. In other embodiments, the work assignment engine 120 may be configured to execute work assignment decisions in a traditional queue-based (or skill-based) contact center 102.

The work assignment engine 120 and its various components may reside in the work assignment mechanism 116 or in a number of different servers or processing devices. In some embodiments, cloud-based computing architectures can be employed whereby one or more components of the work assignment mechanism 116 are made available in a cloud or network such that they can be shared resources among a plurality of different users. Work assignment mechanism 116 may access customer database 118, such as to retrieve records, profiles, purchase history, previous work items, and/or other aspects of a customer known to contact center 102. Customer database 118 may be updated in response to a work item and/or input from resource 112 processing the work item.

It should be appreciated that one or more components of contact center 102 may be implemented in a cloud-based architecture in their entirety, or components thereof (e.g., hybrid), in addition to embodiments being entirely on-premises. In one embodiment, customer communication device 108 is connected to one of resources 112 via components entirely hosted by a cloud-based service provider, wherein processing and data storage elements may be dedicated to the operator of contact center 102 or shared or distributed amongst a plurality of service provider customers, one being contact center 102.

In one embodiment, a message is generated by customer communication device 108 and received, via communication network 104, at work assignment mechanism 116. The message received by a contact center 102, such as at the work assignment mechanism 116, is generally, and herein, referred to as a "contact." Routing engine 132 routes the contact to at least one of resources 112 for processing.

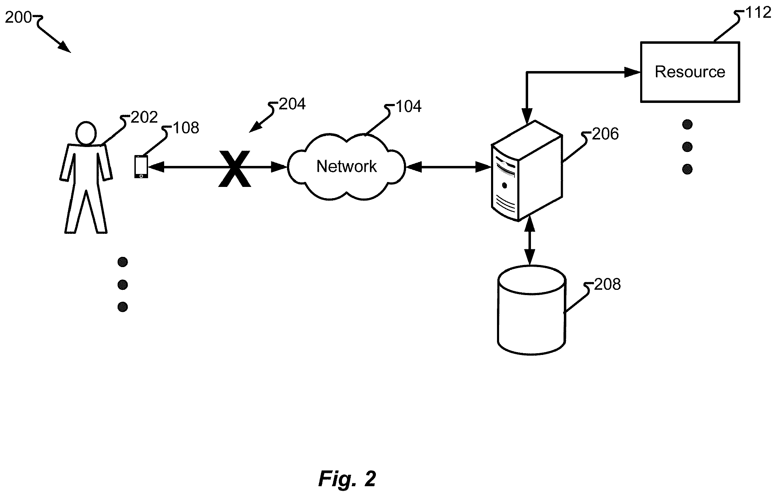

Fig. 2 depicts system 200 in accordance with embodiments of the present disclosure. In one embodiment, customer 202 utilizing customer communication device 108 to conduct an interaction with resource 112 over communications network 104. While quality event 204 is illustrated as occurring between customer communication device 108 and communications network 104, it should be appreciated that, in other embodiments, quality event 204 may be the result of an issue caused by any one or more components utilized in the interaction.

Quality event 204 may result in the interaction being unintendedly disconnected and/or the interaction to be of insufficient quality. In one embodiment, the interaction is a voice telephone call. In other embodiments, the interaction may be an audio/video communication, text, email, etc. Unintentional disconnection may be determined by a microprocessor of server 206, which is facilitating and/or monitoring the interaction, which is disconnected mid-sentence by one of customer 202 or a human or automated agent embodying resource 112. In other embodiments, the absence of a closing script being detected in the interaction may be utilized as an indication of unintentional disconnect. For example, if resource 112 (whether a human agent utilizing an agent communication device or an automated agent) may have a closing script (e.g., "Is there anything else I can help you with?"). If server 206 does not detect the closing script prior to the interaction terminating, it may be identified as an unintentional disconnection. Detection of quality issues is variously embodied and may comprise a speech-to-text generator, such as operating as a portion of server 206, being unable to identify an above-threshold number or portion of speech, determining requests for words or phrases to be repeated (e.g., "Say that again." "I'm not hearing you." etc.), etc. In another embodiment, the ability for the particular resource 112 to resolve the issue may result in insufficient quality. For example, customer 202 may speak phrases, such as, "I don't think you understand." "Can someone else help me?" "That doesn't make sense" etc., if customer 202 or resource 112 then disconnects, quality event 204 may be indicated therefrom.

In the event quality event 204 is detected, server 206 may cause a record to be created or updated in data storage 208. The record may associate customer 202 with quality event 204 which, as described more completely with respect to the figures that follow, allow a second interaction with customer 202 to be escalated, such as to connect customer 202 to the same or different resource 112 before other interactions that may have been received prior to the second interaction.

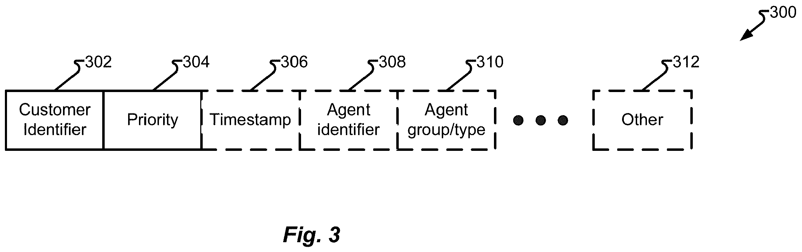

Fig. 3 depicts data structure 300 in accordance with embodiments of the present disclosure. In one embodiment, data structure 300 is created or updated upon the occurrence of quality event 204. Data structure 300 is variously embodied and comprises customer identifier field 302. In one embodiment, customer identifier field 302 comprises an identifier of the same communication channel (e.g., telephone, text, etc.) utilized in the first interaction. For example, caller ID, email address, Session Initiation Protocol (SIP) from address may be utilized as customer identifier field 302. In another embodiment, customer identifier field 302 comprises different or additional identifiers. For example, the customer's name, account number, issue type etc. such that should customer 202 initiate a second interaction utilizing a different communication channel, and identify themselves to an initial information gathering/routing service (e.g., interactive voice response) they can be identified, via customer identifier field 302, as being associated with a prior quality event 204 and receive priority.

Priority 304 is variously embodied. In one embodiment, one particular embodiment, one data structure 300 may be associated with particular customers 202 that have been identified as having a high-priority, conversely customer 202 absent in such an implementation do not have a high priority. Similarly, entries for customers 202 may be within a dedicated low-priority implementation of data structure 300. In another embodiment, priority 304 may indicate a type or degree of priority (e.g., high, low, normal).

In another embodiment, priority 304 may indicate a type of priority and may be embodied as preferred position in a holding queue that would allow the interaction to be received sooner compared to a first-in-first-out or other default order associated with non-priority interactions. In another embodiment, the selected resource 112 in agent identifier 308 and/or agent group/type 310 may be a high-priority resource. For example, customer 202 may be routed to a supervisor or expert (each being one of resource 112) as a priority, as compared to other resource 112 that non-priority interactions would be routed to and/or avoided (e.g., omit initial information gathering performed with an IVR or other screening resource and route directly to the selected resource 112). In another embodiment, the occurrence of customer 202 initiating a subsequent interaction within a previously determined timeframe, such as an hour, may be an indication of a quality event 204. For example, a solution or answer provided to customer 202 may have been assumed to resolve an issue but was discovered to either not address the issue or create a new issue. However, if customer 202 initiated a subsequent interaction beyond a previously determined threshold, then customer 202 is more likely having a different issue and may be treated as a normal (non-priority) interaction.

As introduced above, priority 304 may comprise a value associated with a low priority, such as may occur if a particular customer 202 attempts to "game the system" by seeking an unjustified priority escalation. For example, customer 202 may call repeatedly if they discover that their subsequent calls will receive priority, especially if within a particular time period (see the discussion below regarding priority 304). Such customers may be deliberately slowed, such as by having their calls enqueued after one or more subsequently received calls from other customer, being routed to automated resource 112, or otherwise disincentivized from making repeated calls when not associated with the same issue or reason for the interaction.

In another embodiment, timestamp 306 may be utilized. In one embodiment, timestamp 306 may indicate a time the first interaction between customer 202 and resource 112 was disconnected. In another embodiment, timestamp 306 indicates a time period that, until lapsed, causes data structure 300 to be valid for the particular customer 202. Agent identifier 308 may identify a particular resource 112, such as the resource 112 utilized in interaction having the quality event 204, a supervisor, an expert, etc. Additionally or alternatively, agent group/type 310 may identify a non-specific resource 112 but rather a type or category (e.g., supervisor in international reservations, technical expert with product X, etc.). As a result, a subsequent interaction may be determined as a priority if timestamp 306 is still valid and/or routed to a particular or type of resource 112 based upon entries of agent identifier 308 and/or agent group/type 310.

In another embodiment, other data field 312 may be utilized for other information regarding the interaction, attribute of customer 202 or the nature of the interaction, or other information that may be determined to be, or may be, relevant. The values for agent identifier 308, agent group/type 310, and/or other data field 312 may be provided automatically by a process executing on server 206, such as identifying the resource 112 and/or subject matter of interactions that are routed to resource 112 and any policies for escalation. For example, customer 202 having an interaction with a particular resource 112 in international reservations, and encounters quality event 204 and calls back, will be routed to the supervisor of that particular resource 112, customer 202 talking to a particular resource 112 and references the "deluxe upgrade," and encounters quality event 204 and calls back, will be routed to the next available resource 112 in the high-value sales department.

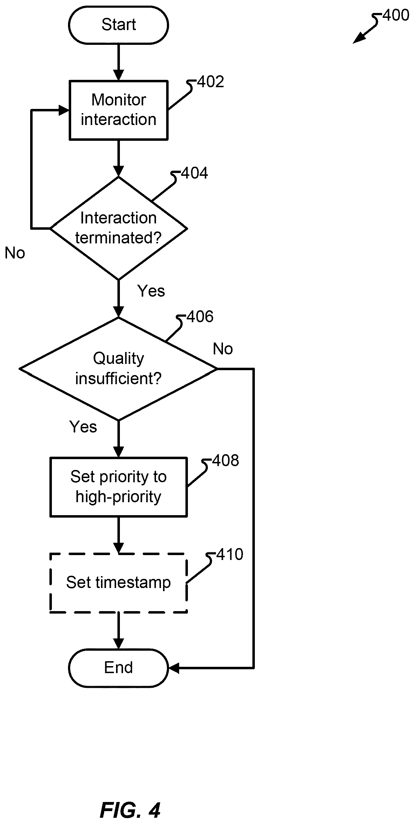

Fig. 4 depicts process 400 in accordance with embodiments of the present disclosure. In one embodiment, step 402 monitors an interaction and, in test 404, determines if the interaction has been terminated, which may loop until such time as test 404 is determined in the affirmative. Test 406 determines if quality is insufficient, such as due to one or more quality events 204. If test 406 is determined in the negative, then process 400 may terminate. If test 406 is determined in the affirmative, then step 408 sets a priority indicator, such as creating or updating data structure 300 to indicate that the customer 202, identified in customer identifier field 302, may be given priority in a subsequent interaction.

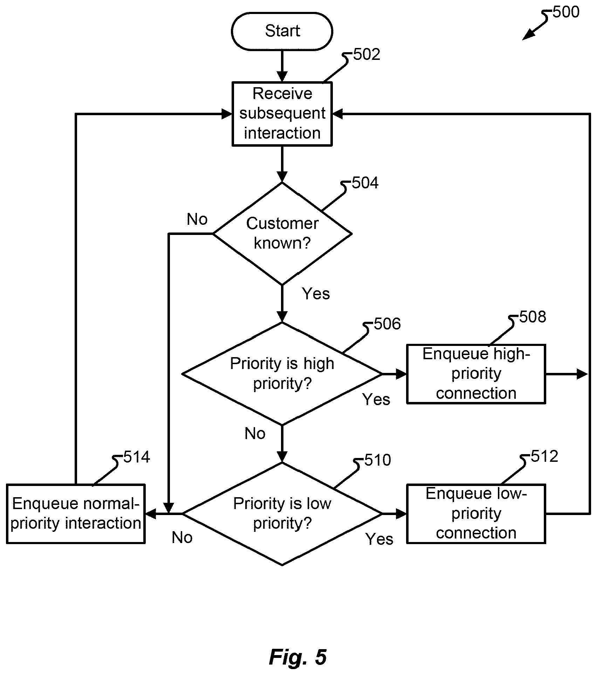

Fig. 5 depicts process 500 in accordance with embodiments of the present disclosure. In one embodiment, process 500 receives a subsequent interaction, such as subsequent to the interaction monitored in step 402 (see, Fig. 4). Test 504 determines if the customer is known, such as by accessing one or more data structure 300 to determine if an identifier of the customer in the received interaction has a matching entry in customer identifier field 302. If test 504 is determined in the negative, processing continues to step 514 such as to answer or enqueue the interaction with normal priority.

If test 504 is determined in the affirmative, test 506 determines if the priority is high, such as by determining if the customer is associated with data structure 300 having a corresponding priority 304 indicating high priority. If test 506 is determined in the affirmative, process 500 continues to step 508 whereby the interaction received at step 502 is processed as a high-priority interaction, such as by receiving expedited routing to resource 112, which may be the same contact center 102 as a previous interaction, or a supervisor, expert for a particular type of resource 112 or subject matter of the prior interaction. If test 506 is determined in the negative, then processing may continue to step 514 or additionally or alternatively, test 510 may be executed to determine if the interaction is a low-priority interaction, such as by determining that customer 202 that initiated the interaction of step 502 has an entry associated with priority 304 indicating low priority, for example as a result of an actual or attempt to "game the system" or denial of service attack. If test 510 is determined in the affirmative, process 500 may continue to step 512 whereby the interaction may be deliberately slowed, ignored, or otherwise de-prioritized. IF test 510 is determined in the negative, processing may continue to step 514 whereby normal handling is implemented for the interaction.

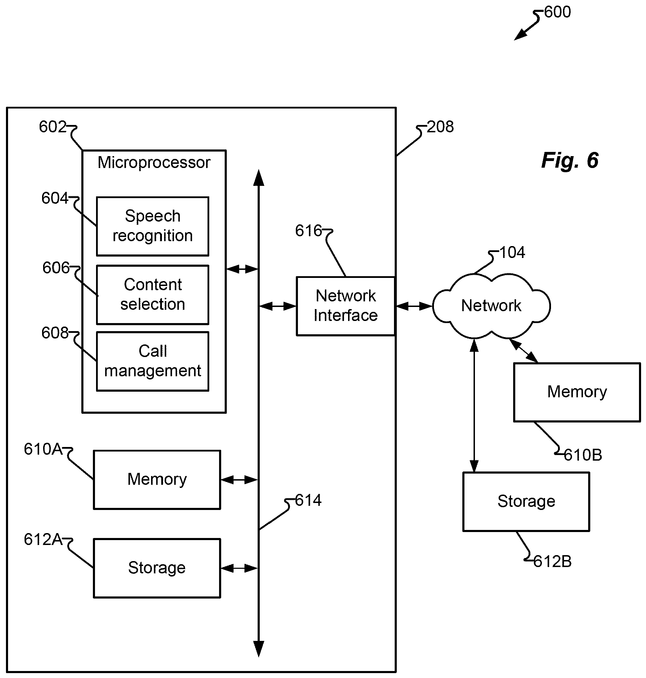

Fig 6. depicts a server system 600 in accordance with embodiments of the present disclosure. In one embodiment, server system 600 comprises server 208 which may comprise one or more microprocessors 602. Microprocessors 602 comprise computational circuitry that may be configured to perform a specific task, such as those described with respect to certain embodiments herein, which may be further configured with machine-readable instructions.

Microprocessor 602 may utilize speech recognition 604, such as to determine that one or more parties to an interaction (e.g., customer 202 and/or resource 112) is having difficulty hearing, being understood, or other quality issue that may have occurred as the result of a quality event 204. Content selection 606 may operate to read/write data into data structure 300 and/or other data repository, including but not limited to memory 610 and/or storage 612. Call management 608 may be implemented to handle interactions, and connections, such as by operating as work assignment mechanism 116, work assignment engine 120, and/or routing engine 132. Call management 608 may also place interactions on hold, record, log time, provide automatic entries into data structure 300.

Microprocessor 602 may communicate within data storage 208 with a bus or other communication device associated with a server or computational device (e.g., blade, array, etc.). Microprocessor 602 may communicate with other components via network interface 616 to communications network 104. Communications network 104 may comprise one or more public or private communication networks. Additionally or alternatively, memory 610 and/or storage 612 may store data and instructions accessible to microprocessor 602. Memory 610 may comprise internal memory 610A and/or external memory 610B. Similarly, storage 612 may comprise internal storage 612A and/or external storage 612B.

In the foregoing description, for the purposes of illustration, methods were described in a particular order. It should be appreciated that in alternate embodiments, the methods may be performed in a different order than that described without departing from the scope of the embodiments. It should also be appreciated that the methods described above may be performed as algorithms executed by hardware components (e.g., circuitry) purpose-built to carry out one or more algorithms or portions thereof described herein. In another embodiment, the hardware component may comprise a general-purpose microprocessor (e.g., CPU, GPU) that is first converted to a special-purpose microprocessor. The special-purpose microprocessor then having had loaded therein encoded signals causing the, now special-purpose, microprocessor to maintain machine-readable instructions to enable the microprocessor to read and execute the machine-readable set of instructions derived from the algorithms and/or other instructions described herein. The machine-readable instructions utilized to execute the algorithm(s), or portions thereof, are not unlimited but utilize a finite set of instructions known to the microprocessor. The machine-readable instructions may be encoded in the microprocessor as signals or values in signal-producing components and included, in one or more embodiments, voltages in memory circuits, configuration of switching circuits, and/or by selective use of particular logic gate circuits. Additionally or alternative, the machine-readable instructions may be accessible to the microprocessor and encoded in a media or device as magnetic fields, voltage values, charge values, reflective/non-reflective portions, and/or physical indicia.

In another embodiment, the microprocessor further comprises one or more of a single microprocessor, a multi-core processor, a plurality of microprocessors, a distributed processing system (e.g., array(s), blade(s), server farm(s), "cloud", multi-purpose processor array(s), cluster(s), etc.) and/or may be co-located with a microprocessor performing other processing operations. Any one or more microprocessor may be integrated into a single processing appliance (e.g., computer, server, blade, etc.) or located entirely or in part in a discrete component connected via a communications link (e.g., bus, network, backplane, etc. or a plurality thereof).

Examples of general-purpose microprocessors may comprise, a central processing unit (CPU) with data values encoded in an instruction register (or other circuitry maintaining instructions) or data values comprising memory locations, which in turn comprise values utilized as instructions. The memory locations may further comprise a memory location that is external to the CPU. Such CPU-external components may be embodied as one or more of a field-programmable gate array (FPGA), read-only memory (ROM), programmable read-only memory (PROM), erasable programmable read-only memory (EPROM), random access memory (RAM), bus-accessible storage, network-accessible storage, etc.

These machine-executable instructions may be stored on one or more machine-readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

In another embodiment, a microprocessor may be a system or collection of processing hardware components, such as a microprocessor on a client device and a microprocessor on a server, a collection of devices with their respective microprocessor, or a shared or remote processing service (e.g., "cloud" based microprocessor). A system of microprocessors may comprise task-specific allocation of processing tasks and/or shared or distributed processing tasks. In yet another embodiment, a microprocessor may execute software to provide the services to emulate a different microprocessor or microprocessors. As a result, first microprocessor, comprised of a first set of hardware components, may virtually provide the services of a second microprocessor whereby the hardware associated with the first microprocessor may operate using an instruction set associated with the second microprocessor.

While machine-executable instructions may be stored and executed locally to a particular machine (e.g., personal computer, mobile computing device, laptop, etc.), it should be appreciated that the storage of data and/or instructions and/or the execution of at least a portion of the instructions may be provided via connectivity to a remote data storage and/or processing device or collection of devices, commonly known as "the cloud," but may include a public, private, dedicated, shared and/or other service bureau, computing service, and/or "server farm."

Examples of the microprocessors as described herein may include, but are not limited to, at least one of Qualcomm® Snapdragon® 800 and 801, Qualcomm® Snapdragon® 610 and 615 with 4G LTE Integration and 64-bit computing, Apple® A7 microprocessor with 64-bit architecture, Apple® M7 motion comicroprocessors, Samsung® Exynos® series, the Intel® Core™ family of microprocessors, the Intel® Xeon® family of microprocessors, the Intel® Atom™ family of microprocessors, the Intel Itanium® family of microprocessors, Intel@ Core® i5-4670K and i7-4770K 22nm Haswell, Intel® Core® i5-3570K 22nm Ivy Bridge, the AMD® FX™ family of microprocessors, AMD® FX-4300, FX-6300, and FX-8350 32nm Vishera, AMD® Kaveri microprocessors, Texas Instruments® Jacinto C6000™ automotive infotainment microprocessors, Texas Instruments® OMAP™ automotive-grade mobile microprocessors, ARM® Cortex™-M microprocessors, ARM® Cortex-A and ARM926EJ-S™ microprocessors, other industry-equivalent microprocessors, and may perform computational functions using any known or future-developed standard, instruction set, libraries, and/or architecture.

Any of the steps, functions, and operations discussed herein can be performed continuously and automatically.

The exemplary systems and methods of this invention have been described in relation to communications systems and components and methods for monitoring, enhancing, and embellishing communications and messages. However, to avoid unnecessarily obscuring the present invention, the preceding description omits a number of known structures and devices. This omission is not to be construed as a limitation of the scope of the claimed invention. Specific details are set forth to provide an understanding of the present invention. It should, however, be appreciated that the present invention may be practiced in a variety of ways beyond the specific detail set forth herein.

Furthermore, while the exemplary embodiments illustrated herein show the various components of the system collocated, certain components of the system can be located remotely, at distant portions of a distributed network, such as a LAN and/or the Internet, or within a dedicated system. Thus, it should be appreciated, that the components or portions thereof (e.g., microprocessors, memory/storage, interfaces, etc.) of the system can be combined into one or more devices, such as a server, servers, computer, computing device, terminal, "cloud" or other distributed processing, or collocated on a particular node of a distributed network, such as an analog and/or digital telecommunications network, a packet-switched network, or a circuit-switched network. In another embodiment, the components may be physical or logically distributed across a plurality of components (e.g., a microprocessor may comprise a first microprocessor on one component and a second microprocessor on another component, each performing a portion of a shared task and/or an allocated task). It will be appreciated from the preceding description, and for reasons of computational efficiency, that the components of the system can be arranged at any location within a distributed network of components without affecting the operation of the system. For example, the various components can be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire, and fiber optics, and may take the form of acoustic or light waves, such as those generated during radio-wave and infra-red data communications.

Also, while the flowcharts have been discussed and illustrated in relation to a particular sequence of events, it should be appreciated that changes, additions, and omissions to this sequence can occur without materially affecting the operation of the invention.

A number of variations and modifications of the invention can be used. It would be possible to provide for some features of the invention without providing others.

In yet another embodiment, the systems and methods of this invention can be implemented in conjunction with a special purpose computer, a programmed microprocessor or microcontroller and peripheral integrated circuit element(s), an ASIC or other integrated circuit, a digital signal microprocessor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this invention. Exemplary hardware that can be used for the present invention includes computers, handheld devices, telephones (e.g., cellular, Internet enabled, digital, analog, hybrids, and others), and other hardware known in the art. Some of these devices include microprocessors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this invention can be implemented as a program embedded on a personal computer such as an applet, JAVA® or CGI script, as a resource residing on a server or computer workstation, as a routine embedded in a dedicated measurement system, system component, or the like. The system can also be implemented by physically incorporating the system and/or method into a software and/or hardware system.

Embodiments herein comprising software are executed, or stored for subsequent execution, by one or more microprocessors and are executed as executable code. The executable code being selected to execute instructions that comprise the particular embodiment. The instructions executed being a constrained set of instructions selected from the discrete set of native instructions understood by the microprocessor and, prior to execution, committed to microprocessor-accessible memory. In another embodiment, human-readable "source code" software, prior to execution by the one or more microprocessors, is first converted to system software to comprise a platform (e.g., computer, microprocessor, database, etc.) specific set of instructions selected from the platform's native instruction set.

Although the present invention describes components and functions implemented in the embodiments with reference to particular standards and protocols, the invention is not limited to such standards and protocols. Other similar standards and protocols not mentioned herein are in existence and are considered to be included in the present invention. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present invention.

The present invention, in various embodiments, configurations, and aspects, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease, and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments, configurations, or aspects for the purpose of streamlining the disclosure. The features of the embodiments, configurations, or aspects of the invention may be combined in alternate embodiments, configurations, or aspects other than those discussed above. This method of disclosure is not to be interpreted as reflecting an intention that the claimed invention requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the invention.

Moreover, though the description of the invention has included description of one or more embodiments, configurations, or aspects and certain variations and modifications, other variations, combinations, and modifications are within the scope of the invention, e.g., as may be within the skill and knowledge of those in the art, after understanding the present disclosure. It is intended to obtain rights, which include alternative embodiments, configurations, or aspects to the extent permitted, including alternate, interchangeable and/or equivalent structures, functions, ranges, or steps to those claimed, whether or not such alternate, interchangeable and/or equivalent structures, functions, ranges, or steps are disclosed herein, and without intending to publicly dedicate any patentable subject matter.

## Claims

1. A system, comprising:
a microprocessor;
a data storage; and
a network interface; and
the microprocessor:
monitors a first communication occurring between a first customer communication device and a first agent communication device utilizing the network interface;
determines the monitored first communication has insufficient connection quality;
in response to the first monitored communication having an insufficient connection quality,
setting a priority record in the data storage to comprising indicia of high priority for the first customer associated with the first customer endpoint;
receives a plurality of subsequent communications via the network interface from a plurality of subsequent customer communication devices;
enqueues the plurality of subsequent communications to connect to ones of a plurality of agent communication devices in a first priority order; and
upon determining one of the plurality of subsequent communications is associated with the priority record comprising indicia of high priority, executing a first requeueing of the plurality of subsequent communications to cause the one of the plurality of subsequent communications to be connected to the next available one of the agent communication device.

2. The system of claim 1, wherein the first requeueing the plurality of subsequent communications to cause the one of the plurality of subsequent communications to be connected to the next available one of the agent communication device, further comprises requeueing the plurality of subsequent communications to cause the one of the plurality of subsequent communications to be connected to the first agent communication device.

3. The system of claim 1, wherein the first priority comprises a first-in-first-out ordering.

4. The system of claim 1, wherein the determining the monitored communication has insufficient connection quality comprises determining the first communication encountering an unintended termination.

5. The system of claim 1, wherein the determining the monitored communication has insufficient connection quality comprises receiving indicia of insufficient connection quality from an agent associated with the first agent communication device.

6. The system of claim 1, wherein the determining the monitored communication has insufficient connection quality comprises determining the amount of line noise is above a previously determined value.

7. The system of claim 1, wherein the determining the monitored communication has insufficient connection quality comprises determining a number of repeated portions of spoken content is above a previously determined value.

8. The system of claim 1, wherein the plurality of subsequent communications utilizes a different communication medium from the first communication.

9. The system of claim 1, wherein setting the priority record in the data storage to comprise indicia high priority comprises setting a timestamp and upon expiration of the priority record, determined by a current time and the timestamp, setting the priority record to remove indicia of high priority.

10. The system of claim 1, further comprising, upon determining the first customer is associated the priority record comprising indicia of blacklisting, omitting the first requeueing and performing a second requeueing of the plurality of subsequent communications to cause at least one of the plurality of subsequent communications, that was received after the one of the plurality of subsequent communications, to be enqueued before the one of the plurality of subsequent communications.

11. A method, comprising:
monitoring a first communication occurring between a first customer communication device and a first agent communication device;
determining the monitored first communication has insufficient connection quality;
in response to the first monitored communication having an insufficient connection quality, setting a priority record to comprising indicia of high priority for the first customer associated with the first customer endpoint;
receiving a plurality of subsequent communications from a corresponding plurality of subsequent customer communication devices;
enqueuing the plurality of subsequent communications to connect to ones of a plurality of agent communication devices in a first priority order; and
upon determining one of the plurality of subsequent communications is associated with the priority record comprising indicia of high priority, executing a first requeueing of the plurality of subsequent communications to cause the one of the plurality of subsequent communications to be connected to the next available one of the agent communication device.

12. The method of claim 11, wherein the first requeueing the plurality of subsequent communications to cause the one of the plurality of subsequent communications to be connected to the next available one of the agent communication device, further comprises requeueing the plurality of subsequent communications to cause the one of the plurality of subsequent communications to be connected to the first agent communication device.

13. The method of claim 11, wherein the first priority comprises a first-in-first-out ordering.

14. The method of claim 11, wherein the determining the monitored communication has insufficient connection quality comprises determining the first communication encountering an unintended termination.

15. The method of claim 11, wherein:
the determining the monitored communication has insufficient connection quality comprises at least one of a) receiving indicia of insufficient connection quality from an agent associated with the first agent communication device or b) determining the amount of line noise is above a previously determined value;
the plurality of subsequent communications utilizes a different communication medium from the first communication; and
setting the priority record to comprise indicia high priority comprises setting a timestamp and upon expiration of the priority record, determined by a current time and the timestamp, setting the priority record to remove indicia of high priority.
